# EUROPEAN PATENT APPLICATION

(11) **EP 4 023 067 A1**
(43) Date of publication of application: **06.07.2022**
(21) Application number: 20383183.9
(22) Date of filing: 31.12.2020
(51) Int. Cl.: A01N 55/10, A01P 1/00

(54) **COMPOUND FOR LONG-LASTING DISINFECTION OF SURFACES**

(71) Applicant: Ditecpesa, S.A., 28042 Madrid (ES)
(72) Inventor: GARCÍA PARDENILLA, José Javier, 28042 Madrid (ES); FERRITTO CRESPO, Rafael, 28042 Madrid (ES)
(74) Representative: Elzaburu S.L.P.

(57) **Abstract**

The present invention refers to a compound which is an oligomer formed by the transesterification reaction of an alkoxy-silane and polyether-polyols. This reaction leads to an oligomeric compound which present anti-microbial properties, so it is useful for disinfecting or preventing pathogens contamination of several types of surfaces.

## Description

### FIELD OF THE INVENTION

The present invention refers to a compound which is an oligomer formed by the transesterification reaction of an alkoxy-silane with a non-ionic surfactant and polyethylene glycol. This reaction leads to an oligomeric compound which present anti-microbial properties, so it is useful for disinfecting or preventing pathogens contamination of several types of surfaces. Therefore, the present invention belongs to the field of chemical biocides, virucides and disinfectants.

### BACKGROUND OF THE INVENTION

The disinfection of high-contact surfaces is seen as an infection control practice to prevent the spread of pathogens in surfaces that may harbor both enteric and respiratory human pathogenic viruses. Surface disinfection reduces levels of infectious viruses, thereby lowering the potential for their spread in commercial and healthcare facilities, as well as residential environments. Unfortunately, recontamination of these surfaces can occur any time after the use of common disinfectants such as bleach, triclosan or hydroalcoholic solutions, which do not remain and are generally wiped dry from surfaces following treatment. Regarding the current situation due to the global pandemic caused by the SARS-CoV-2, the importance of disinfecting surfaces in places like hospital and infrastructure in general has increased.

Several self-disinfecting surfaces capable of inactivating deposited pathogens have been developed during recent years. Organosilanes are a group of compounds which present bactericidal properties. Document US2016/0262398 describes an antimicrobial coating formed by triethanolamine and a silane. Document WO2016/073634 describes a polymeric material based on organosilanes which forms *in situ* with titanium dioxide an antimicrobial coating.

Specifically, the compound 3-(trimethoxysilyl) propyl dimethyl octadecyl ammonium chloride (CAS Nr. 27668-52-6) has been described as an effective disinfectant due to its chemical structure which is able to break the lipid layer of bacteria and some viruses. Thus, some products based on this compound have been developed, such as BAMB^{®}, AEGIS^{®} Microbe Shield or SurfaceWise2^{™} and some studies describing their application and effects were published (J. of Sci. and Technology A- Appl. Sci. and Eng. 18 (1) - 2017*).*

Therefore, there is a clear need of having substances for disinfecting surfaces of different kinds, whose efficiency remains as long as possible.

### DESCRIPTION OF THE INVENTION

The present invention refers to a compound which an oligomer formed by a transesterification reaction between an alkoxysilane a non-ionic surfactant and polyethylene glycol (hereinafter PEG). As a result of this transesterification reaction, a stable oligomer is formed, as demonstrated in the NMR spectra included in the present application. The particular chemical structure of this oligomer presents the ability of destroying the bacterial walls, as well as virus coats, while remains on the applied surface due to its stability. This makes the oligomer, concentrated or in solution, able to disinfects several types of surfaces.

Thus, in a first aspect, the present invention refers to an oligomeric compound formed by the transesterification reaction of the compound of formula (I): 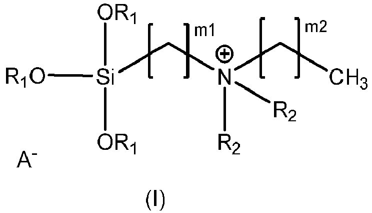 wherein R₁ and R₂ are independently selected from alkyl C₁-C₆, m1 is selected from 1 to 6, m2 is selected from 10 to 20 and A is a counter ion which is a halide, preferably CI, Br or I, and more preferably CI,
with a non-ionic surfactant and a polyethylene glycol (PEG) of molecular weight from 200 to 700 g/mol.

The non-ionic surfactant comprises at least one free OH group and is preferably selected from the group consisting of linear alcohol alkoxylates, branched alcohol alkoxylates, secondary alcohol alkoxylates, tridecyl alcohol alkoxylates, Guerbet alcohol alkoxylates, castor oil alkoxylates, fatty acid alkoxylates, alkylphenol alkoxylates, terpene alkoxylates, sorbitan ester alkoxylates, and mixtures thereof. Some specific examples of these non-ionic surfactants are Triton^{™}X-100 (CAS 9002-93-1), TWEEN^{™}80 (CAS 9005-65-6) or TERGITOL^{™} 15-S-9.

During the transesterification reaction, a replacement of silyl-alkoxide groups of the compound of formula (I) by the OH groups of the non-ionic surfactant and the PEG is produced. This leads to oligomers of mixed alcoxysilanes.

In a preferred embodiment, to obtain the oligomeric compound of the invention, the weight ratio of (I): non-ionic surfactant: PEG may be selected from 1:1:1, 1:2:1, 1:2:2, 1:1:2,2:1:1, 2:2:1, 2:2:2; 2:1:2. In a more preferred embodiment, is 1:1:1.

In the present invention, the term "alkyl" is understood as a radical with linear or branched hydrocarbon chains having 1 to 6 carbon atoms, preferably 1 to 4, and which bind to the rest of the molecule by a single bond, for example, methyl, ethyl,n-propyl,i-propyl,n-butyl,terc-butyl,sec-butyl,n-pentyl, etc. The alkyl groups may be optionally substituted by one or more substituents such as halogen, hydroxyl, alkoxyl, carboxyl, carbonyl, cyano, acyl, alkoxycarbonyl, amino, nitro, mercapto and alkylthio.

In another preferred embodiment, R₁ is alkyl C₁-C₄, and more preferred R₁ is CH₃.

In another preferred embodiment, R₂ is alkyl C₁-C₄, and more preferred R₂ is CH₃.

In another preferred embodiment, m1 is 3.

In another preferred embodiment, m2 is from 12 to 18, preferably 17.

A further aspect of the invention refers to the use of the oligomeric compound according to any one of the preceding claims for disinfecting and/or preventing pathogen contamination of surfaces.

A further aspect of the invention refers to a coating composition comprising the oligomeric compound described above.

A coating composition is understood as a composition which, when applied onto a surface, it establishes chemical and/or physical interactions with the components of such surface. In the present invention, the bifunctional molecules of formula (I) form covalent bonds with the components of the surfaces so that it functionalizes the surfaces and allows the long-lasting biocide effect.

In a preferred embodiment, the oligomeric compound of the invention is diluted in water until a concentration from 0.25 to 12 % by weight to obtain the coating composition. In a more preferred embodiment, until a concentration of 1 wt.%.

In another preferred embodiment, the coating composition also comprises chlorhexidine, silver nitrate, citric acid or combinations thereof.

When the coating composition comprises chlorhexidine, it may be between 0.2 and 1 % by weight of chlorhexidine digluconate.

When the coating composition comprises citric acid, it may be between 2.5 and 5 % by weight of citric acid.

A further aspect of the invention refers to the use of the coating composition as previously described for disinfecting and/or preventing pathogen contamination of surfaces.

In a preferred embodiment, the surface is selected from glass, ceramic, metals, cloth, plastic, stone, paper or board.

Another aspect of the invention refers to a method for obtaining the oligomeric compound as described above, comprising the following steps:
a) obtaining a solution of between 35 to 45 % by weight of the compound of formula (I) in an organic solvent, preferably methanol;
b) adding to the solution obtained in step (a) the non-ionic surfactant and the PEG;
c) heating the mixture obtained in step (c) to a temperature from 70 to 150 °C, preferably 120°C, with an acid catalyst and distillate it at atmospheric pressure to obtain the final product.

Preferably, the acid catalyst is an organic acid such as acetic acid, propionic acid, oxalic acid, uronic acid, tartaric acid, humic acid, maleic acid, citric acid, butyric acid and ascorbic acid and mixtures thereof or an inorganic acid such as nitric acid, sulfuric acid, phosphoric acid, hydrochloric acid, as well mixtures thereof.

### BRIEF DESCRIPTION OF FIGURES

**FIG. 1****.** NMR spectra of the reagents and formulation (Conc.#30)
**FIG. 2****.** NMR spectra showing most relevant shifts occurring in the process of formation of the trans esterified product.
**FIG. 3****.** NMR spectra showing sample of Conc.#30 and in a sample of hydrolysed and lyophilised Conc.#30
**FIG. 4****.** Adduct of the transesterification reaction (Conc.#30) and the result of hydrolysis of Conc.#30
**FIG. 5****.** Shows the inhibition of the infection by human coronavirus 229E. 1 and 2: infected cells on blank glass (BL-GLASS, without Conc.#30). 5 and 6: infected cells on functionalized glass with Conc#30.

### EXAMPLES

### Example 1: obtaining of the composition of the invention

The alkoxy-silane 3-(trimethoxysilyl) propyldimethyloctadecyl ammonium chloride (CAS 27668-52-6) was solved in methanol to obtain a solution at 42% wt. To this solution, Triton and PEG-200 were added, this mixture was heated at 120°C and distilled at atmospheric pressure. The obtained distillate was left to cool at ambient temperature while stirring. The final product is a viscous liquid which was diluted with water to prepare for its application.

### Example 2: structural characterization of the composition

The preparation of a transesterification reaction as a result of the mixture of 1:1:1 of CAS=27668-52-6 42% in methanol, Triton X-100 and PEG 200 according to the invention was carried out. This mixture was diluted in water in order to obtain an stable aqueous solution, typically at 1% of hydrolized CAS=27668-52-6. The chemical entity obtained in this transesterification was called Conc.#30 and the reaction scheme is as follows:

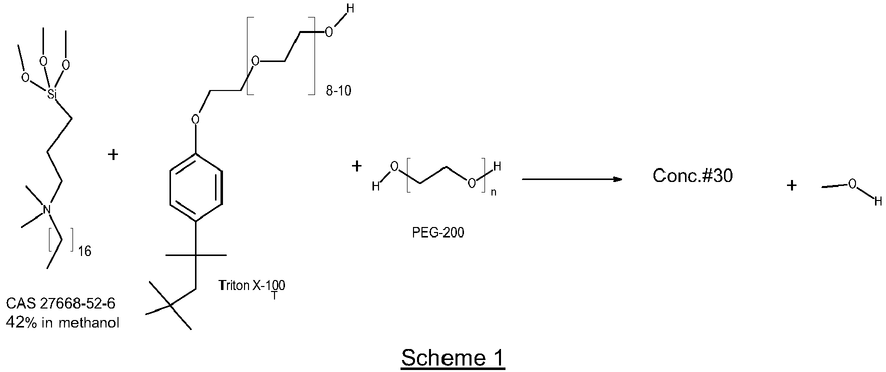

As described in this section, it is provided structural evidence of the formation of a trans esterified compound. After the study of a series of structural techniques, it was found that 13C-NMR is the most appropriate. HPLC-MS was discarded mainly because the nature of the trimethoxy silane derivative hydrolysed in presence of the mobile phase, and the formation of the trihydroxy silane derivative reacts with the stationary phase, mainly silica based HPLC-columns. GC-MS provokes similar effects and high temperatures yield to a decomposition whose derived fragments difficult the interpretation.

Before making an interpretation of different shifts of the signals, the individual 13C-NMR spectra of the components are described. All the spectra have been performed in CDCl3 at 77.00 ppm reference.
- 13C-NMR spectra of the organosilane CAS=27668-52-6, using Gelest as supplier at 60% pure in methanol. REF: SI06620.0 LOT#14664388381.
- 13C-NMR spectra of the PEG 200 CAS=25322-68-3, using TCI as supplier REF: PO840 LOT# JCJGGIT.
- 13C-NMR spectra of the Triton X-100 (PEG MONO-4-OCTYLPHENYL ETHER n=10 CAS=9002-93-1), using TCI as supplier REF: PO873 LOT# VAQ20PM.
- 13C-NMR spectra of the oligomer product of the transesterification reaction Conc.#30
- 13C-NMR spectra of the oligomer product of the transesterification reaction hydrolysed with tap water to reach a dissolution of 1% of principle CAS=27668-52-8. Then the aqueous solution was frozen and lyophilized to avoid temperatures above room temperature and use a mild and effective way to remove water from the sample.
- 13C-NMR spectra of the solution of 1% of CAS=27668-52-8 containing 1:1 molar of Triton X-100. Then the aqueous solution was frozen and lyophilized in order to avoid temperatures above room temperature and use a mild and effective way to remove water from the sample.

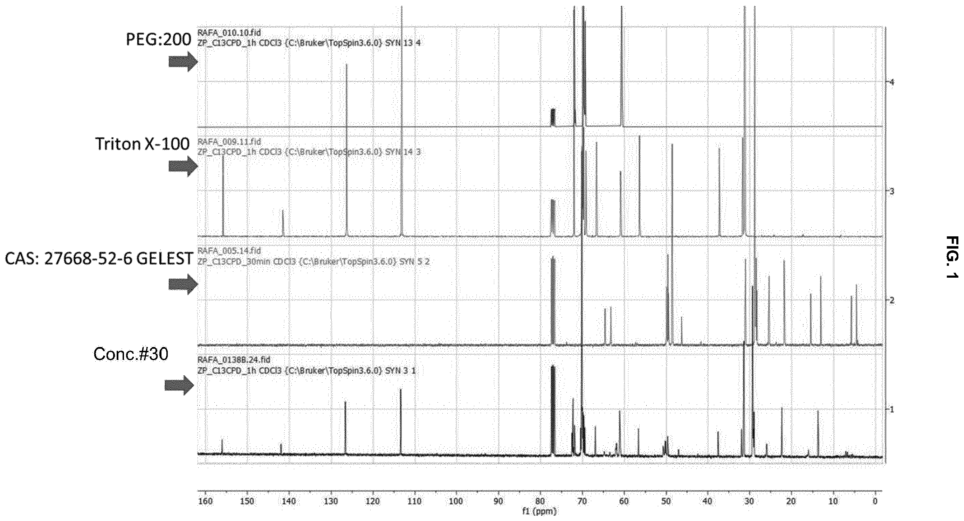

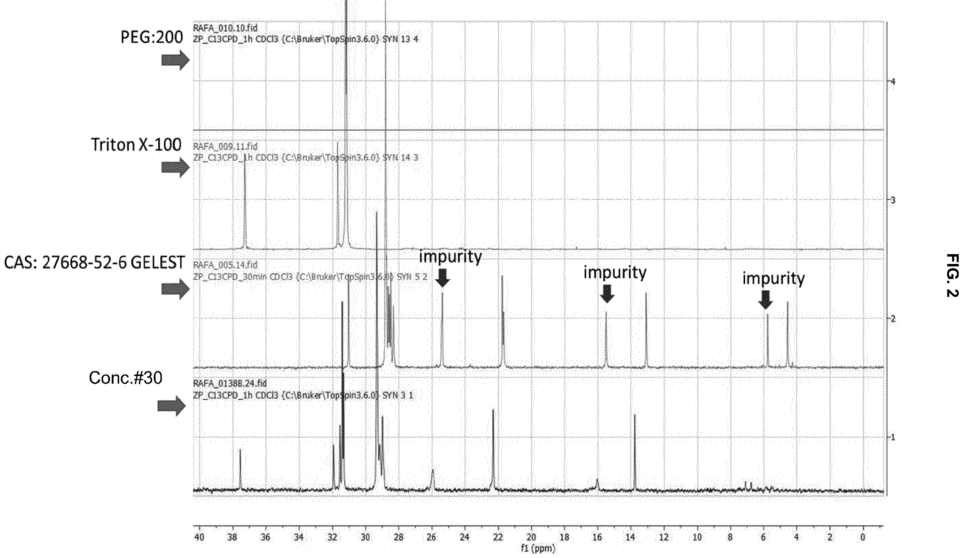

To determine the structural characterization of the components alone and forming the trans esterified product, the appropriate spectra comparation have been provided. Fig. 1 shows the C13NMR of the reagents and final compound Conc.#30. The most relevant shifts occurring in the process of formation of the trans esterified product are shown in Fig. 2. CAS:27668-52-6 GELEST contains an undetermined amount of starting material 3-Trimethoxysilylpropyl Chloride CAS=2530-87-2 that the most representative peaks are represented in the above figure as impurity. As can be noticed those peaks are minoritarian in the formation of the trans esterified product Conc.#30. In addition to this, the characteristic peak at 4.56 ppm on CAS=27668-52-6 GELEST shifted as a sign that the interchanged process of the methoxy group is completed and the formation of the oligomer is completed.

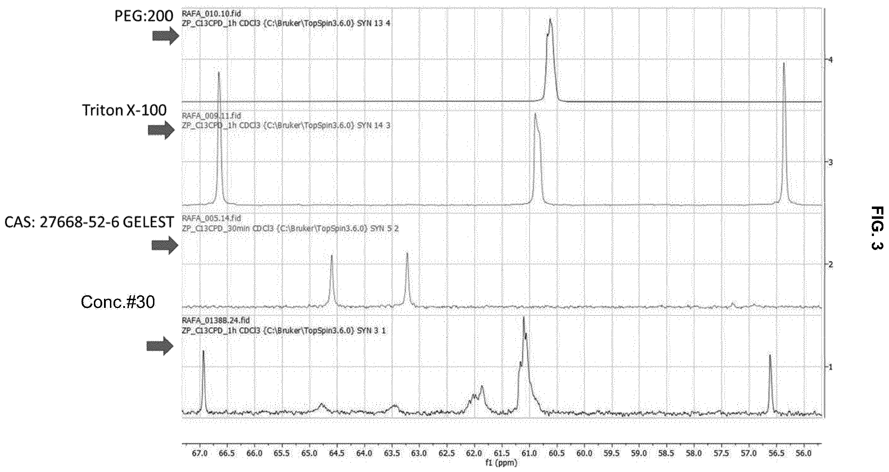

The most relevant shifted peaks on the formation of Conc.#30 with respect to the starting material are produced between 60 to 65 ppm. In this zone, a clear pattern on CAS: 27668-52-6 GELEST corresponding to the 2 -CH₂- adjacent to the quaternary ammonium chloride functional group can be identified. These peaks shifted and Conc.#30 spectrum presents a poor resolution and multiple signals, typical characteristics of peaks of oligomers that are in concordance with the formation of new chemical species. This area represents the unique fingertip in the characterization of this kind of oligomers (see Fig. 3).

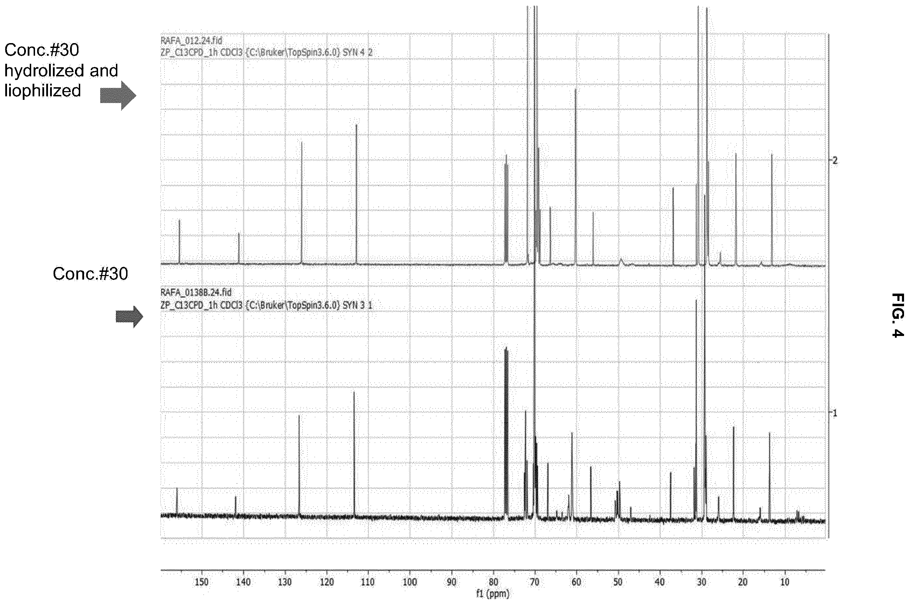

As commented previously, the formation of oligomers is clear, and the transesterification is performed. To demonstrate that the coating composition of the invention remains on the surfaces applied, Conc.#30 was first hydrolysed and lately water was removed by lyophilization to emulate a similar process in the evaporation on surfaces. NMR analysis was made in a sample of Conc.#30 and in a sample of hydrolysed and lyophilised Conc.#30. The obtained spectra are shown in Fig. 4.

### Example 4. Viricide activity assays

The functional validation of the viricidal effect of the compound of the invention on the infectivity of SARS-COV2 has been carried out, by using the human coronavirus 229E (HCoV-229E, from Human Coronavirus 229E), which is a viral subrogate of the etiological agent of the COVID-19.

### Materials y methods:

- Functionalized glass with a composition containing the compound of the invention Conc.#30
- Cell lines: HMVEC-L - Human Lung Microvascular Endothelial Cells, ref: CC-2527, and MRC5 human lung fibroblast cells, ref: CCL-171.
- Viral isolate: Human coronavirus 229E, ref: VR740, was acquired from the American Type Culture Collection repository. Prior to the completion of the assays, the virus 229E acquired at an original titre of 10⁷ particles/mL was amplified for 5 days in MRC5 cell cultures in MEM medium supplemented with 1% FBS until the cytopathic effect and destruction of the monolayer was observed. The estimated viral titre of the stock obtained was 10⁴-10⁵ with respect to the initial stock.

The tests were performed according to the international standard ISO 21702 *"Measurement of antiviral activity on plastics and other non-porous surfaces",* under aseptic conditions under A+ hood in a BSL2 laboratory, according to the recommendations for handling this viral isolate.

Briefly, the tests consist of the main stages:
1.- Preparation of HMVEC-L and MRC5 cells in Petri dishes and M6 multiwell for cell culture. The cells were kept in an incubator at 37°C in an oxygen atmosphere balanced with 5% CO₂, until an 80-90% confluence after 24 or 48 hours prior to infection.
2.- Contact of the surface of the functionalized glass 200 uL of the viral stock at a titre of 10⁴-10⁵ were deposited on the glass, ensuring homogeneous distribution over its entire functionalized surface.
3.- Incubation. After 2h of exposure in an incubator at 37°C in an atmosphere of balanced oxygen with 5% of CO₂, the virus adhered to the functionalized surfaces was recovered through 4 washes with a total of 10mL of neutralizing medium SCDLP, Casein peptone Lecithin Polysorbate Broth (Sigma-Aldrich) supplemented with 5.0 g of NaCl, 2.5 g of disodium phosphate and 2.5 g of glucose per liter.
4.- Exposure of cells in culture with the virus 500 uL of the volume of the neutralizer used in the washings were used for the infectivity test, using for each experimental point at least one well with cells in culture, and every 15 minutes a slight balancing was made to assure the contact of the cells with this medium. After 1h of incubation, the medium was removed by individualized pipetting and the cells were washed twice with maintenance medium without FBS before being replaced by a maintenance medium supplemented with 1% serum.

### Results:

The inhibition of viral infectivity has been initially assessed by observing and identifying the cytopathic effect due to viral replication and spread, through visualization by clear field microscopy techniques using 4X and/or 10X objectives.

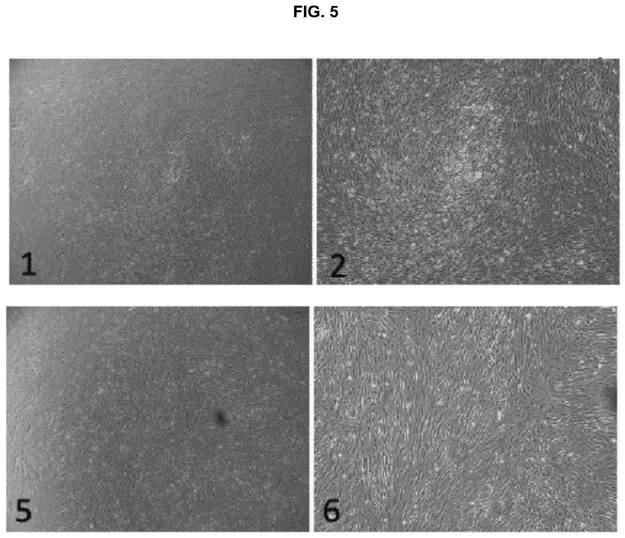

The infectivity of the human 229E virus was notably reduced by the exposure during two hours to the compound Conc.#30 (Fig.5). The viability of human fibroblastic cells MRC5 was reduced by >70% in the control condition, BL-VIDRIO (panel 1 and 2) with respect to those of the non-virus condition Conc.#30 (panels 5-6, Fig.5). These images suggest that the compound Conc.#30 is sufficient to inhibit more than 90% of coronavirus 229E infectivity.

## Claims

1. An oligomeric compound formed by the transesterification reaction of the compound of formula (I): 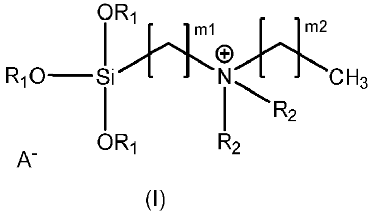
wherein R₁ and R₂ are independently selected from alkyl C1-C4, m1 is selected from 1 to 6, m2 is selected from 10 to 20 and A is a counter ion which is a halide, preferably CI,
with a non-ionic surfactant and a polyethylene glycol (PEG) with a molecular weight between 200 and 700 g/mol.

2. The oligomeric compound according to claim 1, wherein the weight ratio of (I): non-ionic surfactant: PEG is 1:1:1.

3. The oligomeric compound according to any one of preceding claims, wherein R₁ is CH₃.

4. The oligomeric compound according to any one of the preceding claims, wherein R₂ is CH₃.

5. The oligomeric compound according to any one of the preceding claims, wherein m1 is 3.

6. The oligomeric compound according to any one of the preceding claims, wherein m2 is from 12 to 18, preferably 17.

7. The oligomeric compound according to any one of the preceding claims, wherein non-ionic is selected from the group consisting of linear alcohol alkoxylates, branched alcohol alkoxylates, secondary alcohol alkoxylates, tridecyl alcohol alkoxylates, Guerbet alcohol alkoxylates, castor oil alkoxylates, fatty acid alkoxylates, alkylphenol alkoxylates, terpene alkoxylates, sorbitan ester alkoxylates, and mixtures thereof.

8. Use of the oligomeric compound according to any one of the preceding claims for disinfecting and/or preventing pathogen contamination of surfaces.

9. A coating composition comprising the oligomeric compound according to any one of claims 1 to 7, optionally comprising chlorhexidine, silver nitrate, citric acid or combinations thereof.

10. The coating composition according to claim 9, which further comprises between 0.2 and 1 % by weight of clorhexidine digluconate.

11. The coating composition according to any one of claims 9 or 10, which further comprises between 2.5 and 5 % by weight of citric acid.

12. The coating composition according to any one of claims 9 to 11 in which the oligomeric compound is in a concentration between 0.25 to 12 wt.%, preferably 1 wt.%.

13. Use of the coating composition according to any one of claims 9 to 12 for disinfecting and/or preventing pathogen contamination of surfaces.

14. Use according to claim 13, wherein said surfaces are selected from glass, ceramic, metals, cloth, plastic, stone, paper or board.

15. Method for obtaining the oligomeric compound according to any one of claims 1 to 7, comprising the following steps:
a) obtaining a solution of between 35 to 45 % by weight of the compound of formula (I) in an organic solvent, preferably methanol,
b) adding to the solution obtained in step (a) a non-ionic surfactant and PEG,
c) heating the mixture obtained in step (c) to a temperature from 70 to 150 °C, preferably 120°C, with an acid catalyst and distillate it at atmospheric pressure to obtain the final product.
